**Europäisches Patentamt**

**European Patent Office**

**Office européen des brevets**

(11) Veröffentlichungsnummer:

**0 036 447**
**A1**

(12) **EUROPÄISCHE PATENTANMELDUNG**

(21) Anmeldenummer: **80107684.5**

(22) Anmeldetag: **06.12.80**

(51) Int. Cl.³: **B 29 D 23/12**

(30) Priorität: **15.03.80 DE 3010018**

(43) Veröffentlichungstag der Anmeldung: **30.09.81**
**Patentblatt 81/39**

(84) Benannte Vertragsstaaten: **FR GB IT SE**

(71) Anmelder: **Messerschmitt-Bölkow-Blohm Gesellschaft mit beschränkter Haftung, Postfach 801109, D-8000 München 80 (DE)**

(72) Erfinder: **Brunsch, Klaus, Dipl.-Ing., Asternweg 11, D-8190 Weidach (DE)**
Erfinder: **Thomamüller, Dieter, Ing. grad., Blumenstrasse 11 1/2, D-8206 Bruckmühl (DE)**

(54) **Verfahren und Vorrichtung zum maschinellen Herstellen von rohrförmigen Wickelkörpern.**

(57) Bei einer Vorrichtung zum maschinellen Herstellen von rohrförmigen Wickelkörpern aus harzgetränkten Fasersträngen mit einem Wickeldorn (5) sowie einer den Wickeldorn (5) umgreifenden ortsfesten Wickelstation (19, 21) von der über deren Umfang verteilt eine Vielzahl von Fasersträngen dem Wickeldorn (5) tangential und in einem bestimmten Ablagewinkel ($\alpha$) gegen dessen Längsachse zuführbar ist, ist der Wickeldorn (5) zwischen zwei Umkehrpunkten in Richtung seiner Längsachse (7) hin und her verschiebbar und darauf abgestimmt zur Bestimmung des Ablagewinkels ($\alpha$) um seine Längsachse (7) drehbar. Die Faserstränge sind dem Wickeldorn (5) jeweils von ortsfesten, um den Umfang der Wickelstation (19, 21) verteilten Zuführstellen zuführbar.

Messerschmitt-Bölkow-Blohm
Gesellschaft mit beschränkter Haftung
München

Ottobrunn, den 13.03.80
BT01 Cz/ch 0036447
8699

Vorrichtung und Verfahren zum maschinellen Herstellen
von rohrförmigen Wickelkörpern aus harzgetränkten Fasersträngen.

Die Erfindung bezieht sich auf eine Vorrichtung zum
maschinellen Herstellen von rohrförmigen Wickelkörpern
aus harzgetränkten Fasersträngen mit einem Wickeldorn
sowie einer den Wickeldorn umgreifenden ortsfesten Wickelstation, von der über deren Umfang verteilt eine Vielzahl
von Fasersträngen dem Wickeldorn tangential und in einem
bestimmten Ablagewinkel gegen dessen Längsachse zuführbar
ist; ferner bezieht sich die Erfindung auf ein Verfahren
zum maschinellen Herstellen von rohrförmigen Wickelkörpern.

Zur Serienfertigung von aus harzgetränkten Fasersträngen gewickelten Großrohren ist aus der DE-OS 26 34 043 eine Wickelmaschine bekannt, bei der der Wickeldorn mit mehreren
stationären reifenförmigen Wickelstationen umgeben ist.
Auf den dem Wickeldorn zugewandten Innenseiten der Wickelstationen sind mehrere Vorratsspulen vorgesehen, die in einer
Ringbahn längs des Innenumfangs der Wickelstationen um den
Wickeldorn herumgeführt werden. Gleichzeitig wird der Wickeldorn um seine Längsachse bewegt. Zudem wird das auf den Wickeldorn bereits aufgewickelte Wickelgut kontinuierlich in Richtung der Längsachse des Wickeldornes bewegt. Die Art des
Gewebemusters des derart hergestellten Wickelkörpers hängt
von der Anordnung und Ausrichtung der einzelnen Wickelstationen gegenüber dem Wickeldorn sowie ferner von der Geschwindigkeit der in den Wickelstationen um den Wickeldorn herumgeführten Vorratsspulen sowie der Drehgeschwindigkeit des Wickeldornes um seine Längsachse und der damit gekoppelten Längsverschiebung des bereits gewickelten Wickelgutes. Das bereits gewickelte Wickelgut wird kontinuierlich vorgeschoben und damit einem Trockenofen zugeführt, in dem der Wickelkörper ausgehärtet wird. Anschließend wird der rohrförmige Wickelkörper jeweils in Stücke mit gewünschter Länge zugeschnitten.

Die für die Wicklung des Wickelkörpers notwendige Kreuzung der Faserstränge auf dem Wickeldorn wird durch eine Doppelwickelstation erreicht, in der zwei mit ihren ebenen ein V bildende reifenförmige Wickelstationen zusammengefaßt sind, die einen gemeinsamen Übergangssektor aufweisen. Auf diese Weise können die Vorratsspulen von einer ringförmigen Wickelstation auf die andere überführt werden.

Die Vorratsspulen tragen vorgetränkte Faserstränge, da die von den Vorratsspulen abgezogenen Faserstränge wegen des Umlaufs der Spulen um den Wickeldorn beim Wickeln praktisch nicht mehr getränkt werden können. Die Vorratsspulen müssen demnach zunächst mit vorgetränkten Fasersträngen gewickelt werden.

Das Fassungsvermögen der Vorratsspulen ist ferner nur beschränkt, da diese innerhalb der Wickelstation angeordnet sind. Die Dauer des kontinuierlichen Wickelvorganges wird dadurch durch das Fassungsvermögen der Spulen bestimmt ebenso wie auch die Länge des in einem Zuge zu fertigenden Wickelkörpers.

Bei der bekannten Wickelmaschine sind bei der konkreten Ausführung die Drehbewegung des Wickeldornes und die Vorwärtsbewegung des bereits gewickelten Wickelkörpers miteinander gekoppelt. Aus diesem Grunde ist eine Variation des Ablagewinkels der Faserstränge gegenüber der Längsachse des Wickeldornes nur in begrenztem Umfange möglich.

Insgesamt ist die Konstruktion der bekannten Wickelmaschinen aufwendig und im wesentlichen nur zur Serienfertigung von Großrohren geeignet.

Der Erfindung liegt die Aufgabe zugrunde, ein Verfahren und eine Vorrichtung zum Herstellen von Wickelkörpern aus harzgegetränkten Fasersträngen anzugeben, womit die Fertigung vereinfacht und quasi kontinuierlich betrieben werden kann; außerdem soll sich ein ausgeglichener Wickelverbund ergeben, für den die Eigenschaften, insbesondere der Ablagewinkel in weiten Bereichen an den jeweiligen Anwendungsfall angepaßt werden können.

Diese Aufgabe ist für eine Vorrichtung der eingangs genannten Art dadurch gelöst, daß der Wickeldorn zwischen zwei Umkehrpunkten in Richtung seiner Längsachse hin und her verschiebbar und darauf abgestimmt zur Bestimmung des Ablagewinkels um seine Längsachse drehbar ist, und daß die Faserstränge den Wickeldorn jeweils von ortsfesten, um den Umfang der Wickelstation verteilten Zuführstellen zuführbar sind.

Gemäß einer bevorzugten Ausführungsform der Erfindung sind außerhalb der Wickelstation Vorratsspulen für die Faserstränge und in der Wickelstation für alle von den Vorratsspulen abgezogene und zu dem Wickeldorn geführte Faserstränge jeweils ortsfeste Umlenk- und Führungseinrichtungen vorgesehen.

Die Wickelstation umgibt dabei vorzugsweise den Wicklungsdorn in einer Ebene senkrecht zu dessen Längsachse.

Gemäß der Erfindung befinden sich in der Wickelstation keine bewegten Teile und insbesondere keine bewegten Teile, die während des Wickelvorganges um den Wickeldorn herumgeführt werden müßten. Vielmehr werden die Faserstränge über ortsfeste Zuführstellen in der Wickelstation dem Wickeldorn zugeführt; am einfachsten und vorteilhaftesten geschieht dies dadurch, daß unbehandelte Faserstränge auf Vorratsspulen außerhalb der Wickelstation aufgewickelt sind und beim Abwickeln durch ein stationäres Harzträmkbad geführt und von ort in die Wickelstation eingeleitet werden, wo sie von ebenfalls ortsfesten Umlenk- und Führungseinrichtungen aufgenommen werden. Von diesen Führungseinrichtungen laufen dann die Faserstränge zu dem Wickeldorn.

Neben der einfachen Konstruktion hat eine derartige Ausbildung einer Wickelvorrichtung bzw. Wickelmaschine noch den Vorteil, daß die Vorratsspulen außerhalb der Wickelstation wesentlich größere Fassungsvermögen als Vorratsspulen innerhalb der Wickelstation haben, so daß die Dauer des kontinuierlichen Wickelvorganges praktisch nicht mehr begrenzt ist. Außerdem können Vorratsspulen mit unpräparierten Fasersträngen verwendet werden, da zum Tränken der Faserstränge eine einfache stationäre Tränkanlage vorgesehen sein kann.

Durch die Möglichkeit der Steuerung von Längs- und Drehbewegung des Wickeldornes wird ein ausgeglichener Wickelverbund mit über den gesamten Umfang gleichem relativen Dickenanteil erreicht. Durch Abstimmung der Längs- und Drehbewegung und der entsprechenden Geschwindigkeit des Wickeldornes an der Ablagewinkel der Fasern gegenüber der Längsachse des Wickeldornes in einem relativ großen Bereich eingestellt werden. Die Längs- und Drehbewegungen des Wickeldornes brauchen während des Wickelvorganges nicht immer in gleichem Sinne zu erfolgen; vielmehr ist es möglich, durch Umkehr der Längs- und/oder Drehbewegung einen ganz speziellen gewünschten Wickelverbund zu erhalten.

Es ist zwar bekannt, Wickelkörper aus faserverstärkten Werkstoffen dadurch zu wickeln, daß ein endloser Faserstrang der Oberfläche des Wickeldorns zugeführt wird, während der Wickeldorn in Längsrichtung bewegt und überlagert um seine Längsachse gedreht wird. Durch die Abstimmung der Längsbewegung und der Rotation des Wickeldornes wird der Ablagewinkel des Faserstranges gegen die Längsachse des Wickeldorns bestimmt; vgl. DE-OS 27 20 983. In dieser Druckschrift ist jedoch kein Hinweis auf eine Wickelvorrichtung mit Zufuhr von einer Vielzahl von Fassersträngen gegeben.

Die erfindungsgemäße Vorrichtung und das zugehörige Verfahren können praktisch zum Wickeln von rohrförmigen Wickelkörpern jeden Durchmessers verbunden werden. Außerdem ist es möglich, die Vorrichtung zu einer gesamten Fertigungsanlage zu erweitern, mit der quasi kontinuierlich Wickelkörper gefertigt werden können. Hierzu ist der Wickelkörper vorzugsweise einseitig in einer Antriebsstation verbunden, die einen ersten Längsantrieb zum Verschieben des Wickeldornes in Richtung dessen Längsachse und einen zweiten Drehantrieb zum Drehen des Wickeldornes um dessen Längsachse aufweist. Diese Antriebsstation kann ferner mit einem Schwenkantrieb um ihre Hochachse geschwenkt werden. Zusätzlich sind dann im Schwenkbereich der Antriebsstationen eine Heizstation zum Aushärten des von der Wickelstation mittels der Antriebsstation überführten Wickelkörpers, ferner anschließend eine Abziehstation zum Abziehen des Wickelkörpers von dem Wickeldorn und schließlich eine Vorbereitungsstation zum Rüsten der Antriebsstation mit einem unbewickelten Wickeldorn vorgesehen. Die erwähnten zusätzlichen Stationen haben eine Aufnahmekapazität für jeweils mindestens zwei Wickeldorne.

Nach der oben beschriebenen Fertigung eines Wickelkörpers werden zunächst die Faserstränge zwischen Wickelstation und Wickelkörper durchschnitten, wonach der bewickelte Wickeldorn mittels der Antriebsstation in die Heizstation geschwenkt und dort zum Aushärten in einen Trockenofen abgelegt wird.
Befindet sich von einem vorherigen Wickelvorgang in der Heizstation ein Wickeldorn mit einem inzwischen ausgehärteten
Wickelkörper, so wird dieser Wickeldorn in die nächste Station,
d.h. in die Abziehstation befördert, in der der ausgehärtete
Wickelkörper von dem Wickeldorn abgezogen wird. Ansonsten wird
die Antriebsstation in Richtung der Vorbereitungsstation geschwenkt und mit einem unbewickelten Wickeldorn bestückt, der
dann in die Wickelstation überführt und nach Anschluß der Faserstränge neu bewickelt wird. Die Ausfallzeiten für die Wicklung
von rohrförmigen Wickelkörpern sind daher nur sehr gering und
entsprechen im wesentlichen den Schwenk- und Ablagezeiten der
Antriebsvorrichtung zwischen und in den zusätzlichen Stationen.

Weitere Ausgestaltungen und Vorteile der Erfindung gehen aus
den Unteransprüchen in Verbindung mit der nachfolgenden Beschreibung hervor, in der ein Ausführungsbeispiel einer erfindungsgemäßen Wickelmaschine anhand der Zeichnung näher erläutert ist. In der Zeichnung stellen dar:

Figur 1     eine schematische Vorderansicht einer Vorrichtung
            zum Wickeln von rohrförmigen Wickelkörpern gemäß
            der Erfindung;

Figur 2     eine schematische, teilweise geschnittene Seitenansicht der Vorrichtung gemäß Figur 1;

Figur 3     schematisch eine Aufsicht auf eine Vorrichtung gemäß den Figuren 1 und 2, die durch drei zusätzliche Bearbeitungsstationen zu einer Gesamtanlage
            ergänzt ist.

Eine Wickelvorrichtung 1 weist eine Halte- und Antriebsstation 3 für einen Wickeldorn 5 auf. Der Wickeldorn 5 ist einseitig in Richtung der Längsachse 7 mittels einer Welle 9
in der Antriebsstation 3 gelagert; die Welle 9 wird von einem
Drehmotor bzw. Drehantrieb in Rotation versetzt, wodurch der
Wickeldorn 5 um seine Längsachse 7 gedreht wird.

Die Antriebsstation kann mittels eines Längsantriebs bzw.
Längsmotors 13 entlang von Führungsschienen 15 verschoben
werden, welche parallel zu der Längsachse 7 des Wickeldorns
verlaufen. Außerdem kann der Oberteil der Antriebsstation
mit Hilfe eines Schwenkantriebs bzw. Schwenkmotors 17 um
die Hochachse der Antriebsstation geschwenkt werden; der
Zweck dieser Maßnahme wird weiter unten erläutert.

Der Wickeldorn wird mit der Antriebsstation längs der
Führungsschienen 15 in eine Wickelstation 19 eingeführt.
Diese Wickelstation 19 weist einen Faserstrangführungsring 21
auf, der den Wickeldorn 5 umgibt und mit einem Standfuß 23
versehen ist.

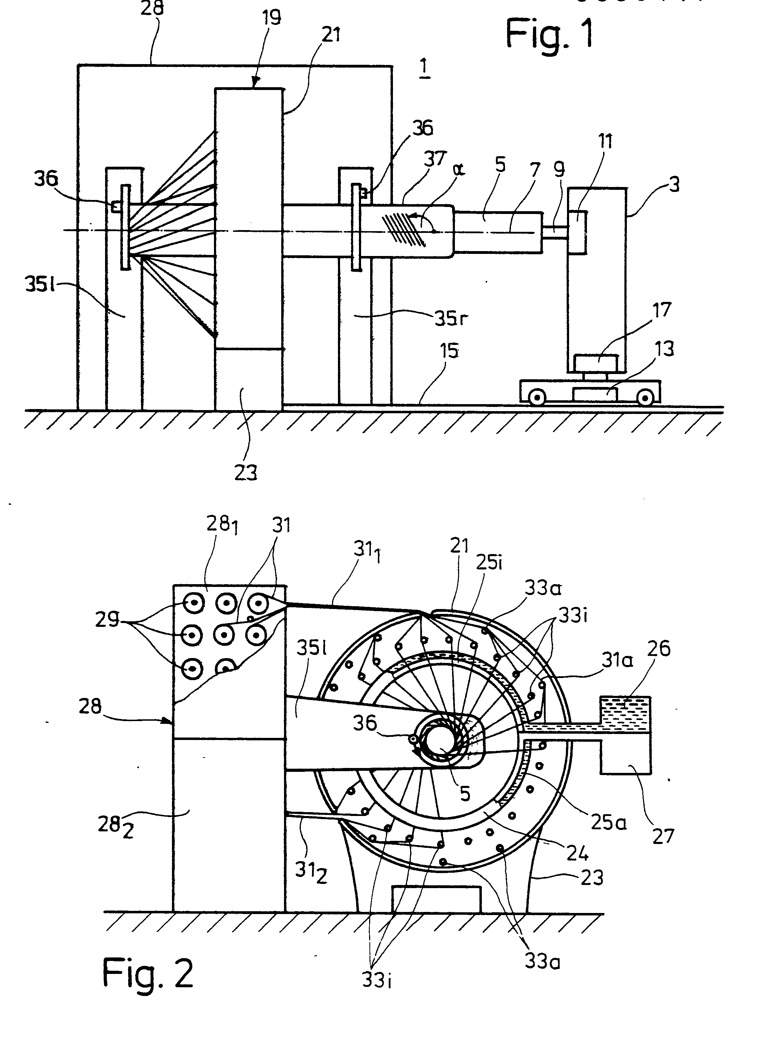

In dem Führungsring 21 ist noch eine ringförmige Tränkvorrichtung 24
mit zwei konzentrischen Kammern 25a und 25i vorgesehen; die
äußere Kammer 25a ist mit einem Vorratsbehälter 26 für eine
Kunstharzmasse, die innere Kammer 25i mit einer Unterdruckquelle 27 verbunden. Die Außenwände und Trennwand der Kammern
weisen mehrere hier nicht dargestellte schmale Schlitze auf.
Der Vorratsbehälter 26 und die Unterdruckquelle 27 sind normalerweise in einem Vorratsspulenbehälter 28 eingebaut und hier nur zur
Erläuterung außerhalb dargestellt. In diesem Vorratsspulenbehälter 28 sind zwei Spulenräume $28_1$ und $28_2$ vorgesehen, in denen
jeweils zwölf Vorratsspulen 29 gelagert sind, auf die unbehandelte Faserstränge 31 aufgewickelt sind. Der Faserstrang $31_1$
von den oberen Vorratsspulen wird an den oberen Scheitelpunkt
des Fadenführungsringes 21 geführt und dort in dessen Innenseite
eingeleitet. An der Innenseite des Fadenführungsringes 21 sind
mehrere Umlenk- und Führungseinrichtungen 33 vorgesehen, die in zwei konzentrischen Kreisen angeordnet sind. Längs des inneren konzentrischen Kreises sind vierundzwanzig Führungseinrichtungen $33_i$ vorgesehen, während längs des äußeren konzentrischen Kreises nur einige wenige, hier mit $33_a$ bezeichnete Führungseinrichtungen für die Faserstränge vorgesehen sind. Von den inneren Führungseinrichtungen $33_i$ werden durch die erwähnten Schlitze die Faserstränge $31_1$ durch den Tränkring 24 geführt und verlaufen danach weiter in Richtung auf den Wickeldorn 5 und liegen an diesem tangential an. Die Faserstränge $31_2$ aus dem unteren Spulenraum werden ebenfalls in ähnlicher Weise wie die oberen Faserstränge $31_1$ dem Fadenführungsring und dem Wickeldorn zugeführt. Eine schematische Darstellung der Führung der einzelnen Fadenstränge innerhalb des Fadenführungsrings 21 geht aus Figur 2 hervor.

Zu beiden Seiten des Fadenführungsrings 21 sind jeweils in gleichen Abständen zwei Verknotvorrichtungen $35_l$ bzw. $35_r$ aufgestellt, die den Wickeldorn umgreifen und auf denen eine um den Wickeldorn laufende Fadenspule 36 angeordnet ist. Mit dem Faden der Fadenspule kann um den Wickeldorn eine Schlinge aus einem dünnen Faserstrang gelegt werden.

Für den Wickelvorgang werden zunächst die insgesamt vierundzwanzig Faserstränge 31 an einer Seite des Wickeldorns 5 in gleichen Umfangs-Winkelabständen mit geeigneten Mitteln befestigt; diese Befestigung kann z.B. in der in Figur 1 gezeigten Stellung des Wickeldorns geschehen, in der sich das linke Ende des Wickeldorns 5 in Höhe der linken Verknotvorrichtung $35_l$ befindet. Danach wird die Antriebsstation 3 mittels des Längsmotors 13 in Richtung auf den Fadenführungsring soweit wie möglich verschoben. Gleichzeitig wird dabei der Wickeldorn um seine Längsachse 7 mit dem Drehmotor 11 verdreht. Hierdurch werden die Faserstränge von den Vorratsspulen abgespult und durch den Tränkring gezogen. Durch den Unterdruck in der inneren Kammer $25_i$ des Tränkrings 14 werden die Faserstränge 31, während sie durch die Schlitze in der Trennwand gezogen werden, gerade mit der gewünschten Harzmenge getränkt. Durch die Dreh- und Längsbewegung des Wickeldorns werden die getränkten Faserstränge auf den Wickeldorn aufgewickelt. Die Geschwindigkeiten der Längsbewegung und der Drehbewegung des Wickeldorns werden so aufeinander abgestimmt, daß sich ein gewünschter Ablagewinkel $\alpha$ zwischen der Längsachse 7 des Wickeldorns 5 und der Faserstrangrichtung auf dem Wickeldorn ergibt.

Ist diese Längsbewegung, in Figur 1 nach links, beendet, wird mit der linken Verknotvorrichtung $35_l$ um die bisher aufgewickelten Faserstränge eine Schlinge gelegt, wodurch die Faserstränge auf dem Wickeldorn fixiert werden. Anschließend wird die Antriebsstation 3 in Figur 1 nach rechts soweit zurückgezogen, bis das linke Ende des Wickeldorns sich in Figur 1 rechts von dem Fadenführungsring 21 befindet; hierbei werden die Faserstränge noch nicht auf dem Wickeldorn abgelegt. Dieser wird jedoch weiter gedreht, um die Faserspannung bei dieser Richtungsumkehr zu erhalten. Erst danach wird der Wickeldorn wieder mit Fasersträngen belegt und dabei so weit zurückgezogen, bis das linke Ende des Wickeldorns der rechten Verknotvorrichtung $35_r$ gegenübersteht. Der Faserstrang der Fadenspule der Verknotvorrichtung wird bei der Längsverschiebung des Wickeldorns mitgezogen und unidirektional auf diesem abgelegt. Die Drehbewegung des Wickeldorns bei der Rechtsverschiebung erfolgt in gleichem Sinne wie bei der Längsbewegung nach links, so daß sich hierbei ein Ablagewinkel $-\alpha$ ergibt. Es ist allerdings auch möglich, zusätzlich auch noch die Drehbewegung umzukehren, wodurch beim Rücklauf die Ablage der Faserstränge in gleicher Ablagerichtung erfolgt und somit die Lagendicke verdoppelt wird. Ferner kann auch durch unterschiedliche Steuerung des Drehmotors und des Längsmotors der Ablagewinkel bei aufeinanderfolgenden Längsbewegungen oder auch innerhalb einer Längsbewegung selbst verändert werden, so daß ein gleichmäßiger Wickelverbund erzielt werden kann.

Steht am Ende der Längsbewegung nach rechts das linke Ende des Wickeldorns der rechten Verknotvorrichtung gegenüber, wird wiederum um die aufgewickelten Faserstränge zur Fixierung auf dem Wickeldorn eine Schlinge gelegt. Anschließend wird der Wickeldorn wie oben beschrieben nach links verschoben und gleichzeitig um seine Längsachse gedreht.

Der Wickelvorgang wird solange fortgesetzt, bis ein rohrförmiger Wickelkörper 37 gewünschter Dicke entstanden ist. Die Faserstränge zwischen Faserführungsring und Wickelkörper werden danach durchtrennt, wonach der Wickelkörper wie üblich getrocknet und weiterbehandelt wird.

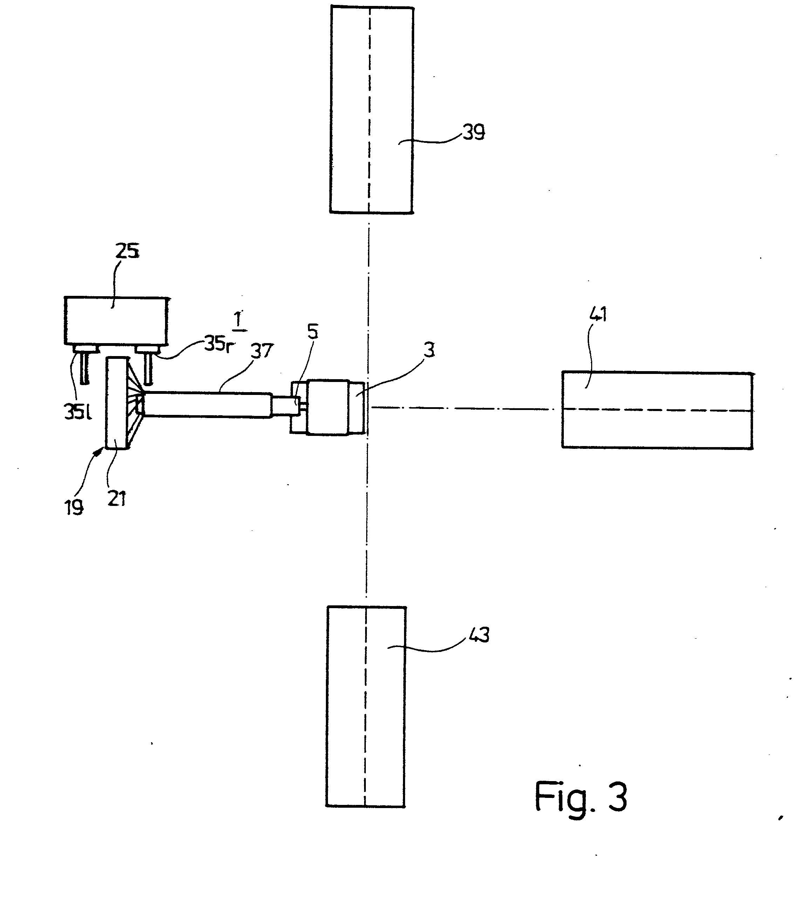

Der beschriebene Wickelvorgang und die nachfolgenden Bearbeitungsschritte können mit einer Anlage gemäß Figur 3 weiter rationalisiert werden. In Figur 3 ist die in den Figuren 1 und 2 gezeigte Wickelvorrichtung 1 in Aufsicht gezeigt. In Winkelabständen von jeweils 90° sind im Uhrzeigersinn aufeinanderfolgend eine Heizstation 39, eine Abziehstation 41 und eine Vorbereitungsstation 43 vorgesehen. Die erwähnten zusätzlichen Stationen haben ein Fassungsvermögen von mindestens zwei Wickeldornen.

Sobald, wie oben beschrieben, der Wickelkörper fertiggestellt ist und die Faserstränge zwischen diesem und dem Fadenführungsring durchtrennt sind, wird die Antriebsstation mit dem oben erwähnten Schwenkmotor 17 um 90° im Uhrzeigersinn in die Heizstation 39 gedreht, wo der Wickeldorn mit dem Wickelkörper zum Aushärten abgelegt wird. Ist in der Heizstation bereits ein früher gewickelter Wickeldorn vorhanden, so wird dieser von der Antriebsstation übernommen und in die nachfolgende Abziehstation überführt, in der der Wickelkörper von dem Wickeldorn abgezogen wird. Anschließend wird die Antriebsstation mit einem neuen Wickeldorn aus der Vorbereitungsstation ausgerüstet und wie oben beschrieben in der Wickelvorrichtung 1 mit einem weiteren Wickelkörper bewickelt. Die hier nur schematisch im einzelnen beschriebenen Stationsschritte erlauben ein quasi kontinuierliches Bewickeln von Wickeldornen mit Fasersträngen. Die Ausfallzeiten für die Wickelung sind praktisch lediglich die geringen Schwenk-, Ablage-, und Aufnahmevorgänge der Arbeitsstation an den zusätzlichen Stationen, so daß die effektive Wickelzeit sehr groß ist. Die Aushärtezeiten der gewickelten Wickelkörper können entsprechend lang sein, so daß Schwierigkeiten hinsichtlich zu kurzer Trockenzeiten nicht auftreten. Insgesamt wird hiermit eine rationelle und wirtschaftliche Fertigung ermöglicht.

Messerschmitt-Bölkow-Blohm
Gesellschaft mit
beschränkter Haftung
München

Ottobrunn, den 13.03.80
BT01 Cz/ch 0036447
8699

Verfahren und Vorrichtung zum maschinellen Herstellen von
rohrförmigen Wickelkörpern

P a t e n t a n s p r ü c h e

1. Vorrichtung zum maschinellen Herstellen von rohrförmigen
   Wickelkörpern aus harzgetränkten Fasersträngen mit einem
   Wickeldorn sowie einer den Wickeldorn umgreifenden ortsfesten Wickelstation, von der über deren Umfang verteilt
   eine Vielzahl von Fasersträngen dem Wickeldorn tangential
   und in einem bestimmten Ablagewinkel gegen dessen Längsachse zuführbar ist, dadurch gekennzeichnet, daß der
   Wickeldorn (5) zwischen zwei Umkehrpunkten in Richtung
   seiner Längsachse (7) hin und her verschiebbar und darauf
   abgestimmt zur Bestimmung des Ablagewinkels ($\alpha$) um seine
   Längsachse (7) drehbar ist, und daß die Faserstränge (31)
   den Wickeldorn (5) jeweils von ortsfesten, um den Umfang
   der Wickelstation (19, 21) verteilten Zuführstellen (33)
   zuführbar sind.

2. Vorrichtung nach Anspruch 1, dadurch gekennzeichnet, daß
   außerhalb der Wickelstation (19) Vorratsspulen (29) für
   die Faserstränge (31) und in der Wickelstation (19) für
   alle von den Vorratsspulen abgezogenen und zu dem Wickeldorn (5) geführten Faserstränge (31) jeweils ortsfeste
   Umlenk- und Führungseinrichtungen (33) vorgesehen sind.

3. Vorrichtung nach einem der vorhergehenden Ansprüche, dadurch gekennzeichnet, daß die Wickelstation (19) den Wickel - dorn (5) in einer Ebene senkrecht zu dessen Längsachse (7) reifenförmig umgibt.

4. Vorrichtung nach einem der vorhergehenden Ansprüche, dadurch gekennzeichnet, daß den Umkehrpunkten in der Längsbewegung des Wickeldornes (5) zugeordnete Haltemittel (35) zum Fixieren der während der vorhergehenden Längsbewegung auf dem Wickeldorn (5) aufgewickelten Faserstränge (31) vorgesehen sind.

5. Vorrichtung nach Anspruch 4, dadurch gekennzeichnet, daß als Haltemittel (2) zu beiden Seiten der stationären Wickelstation (19) angeordnete Verknotvorrichtungen ($35_1$, $35_r$) vorgesehen sind zum Herumlegen einer Schlinge um die aufgewickelten Faserstränge (31).

6. Vorrichtung nach einem der vorhergehenden Ansprüche, dadurch gekennzeichnet, daß der Wickeldorn (5) einseitig in einer Antriebsstation (3) gelagert ist.

7. Vorrichtung nach Anspruch 6, dadurch gekennzeichnet, daß die Antriebsstation (3) einen Längsantrieb (13) zum Verschieben des Wickeldornes (5) in Richtung dessen Längsachse (7) und einen Drehantrieb (11) zum Drehen des Wickeldornes um dessen Längsachse (7) aufweist.

8. Vorrichtung nach Anspruch 7, dadurch gekennzeichnet, daß die Antriebsstation (3) einen Schwenkantrieb (17) zum Schwenken der Antriebsstation um deren Hochachse aufweist.

9. Vorrichtung nach Anspruch 8, dadurch gekennzeichnet, daß zusätzlich im Schwenkbereich der Antriebsstation (3) eine Heizstation (39) zum Aushärten des von der Wickelstation (19) mittels der Antriebsstation (3) überführten Wickelkörpers (37) , ferner anschließend eine Abziehstation (41) zum Abziehen des Wickelkörpers von dem Wickeldorn und schließlich eine Vorbereitungsstation (43) zum Rüsten der Antriebsstation mit einem unbewickelten Wickeldorn vorgesehen sind.

10. Vorrichtung nach Anspruch 9, dadurch gekennzeichnet, daß die im Schwenkbereich der Antriebsstation (3) liegenden weiteren Stationen (39, 41, 43) eine Aufnahmekapazität für mindestens zwei Wickeldorne aufweisen.

11. Verfahren zum maschinellen Herstellen von rohrförmigen Wickelkörpern aus harzgetränkten Fasersträngen , wobei von einer den Wickeldorn umgreifenden Wickelstation um deren Umfang verteilt eine Vielzahl von Fasersträngen dem Wickeldorn tangential und in einem bestimmten Ablagewinkel gegen dessen Längsachse zugeführt wird, dadurch gekennzeichnet, daß der Wickeldorn zwischen zwei Umkehrpunkten in Richtung seiner Längsachse hin- und herverschoben und darauf abgestimmt, zur Bestimmung des Ablagewinkels um seine Längsachse gedreht wird, und daß die Faserstränge den Wickeldorn jeweils von ortsfesten Zuführstellen in der Wickelstation zugeführt werden.

12. Verfahren nach Anspruch 11, dadurch gekennzeichnet, daß die Faserstränge an den Umkehrpunkten der Längsbewegung des Wickeldornes auf diesem fixiert werden.

13. Verfahren nach Anspruch 12, dadurch gekennzeichnet, daß um die Faserstränge an den Umkehrpunkten eine Schlinge um den Wickeldorn gelegt wird.

Fig. 1

Fig. 2

0036447

Fig. 3

Europäisches Patentamt

**EUROPÄISCHER RECHERCHENBERICHT**

0036447

Nummer der Anmeldung

EP 80 10 7684.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 546 989 (UNION CARBIDE)<br>* Seite 2, Zeilen 73 bis 77 *<br>-- | 1-3,7,<br>11 |
|  | US - A - 3 201 298 (W.A. BAKER et al.)<br>* Fig. 2 *<br>-- | 2 |
|  | DE - A1 - 2 423 914 (VETRORESINA)<br>* Anspruch 1; Fig. 1 *<br>-- | 6,8,9 |
| A | US - A - 3 378 427 (W.G. McCLEAN)<br>* Fig. 1 *<br>-- | |
| A | US - A - 3 679 508 (J.C. WEIDEL)<br>* Fig. 1 *<br>-- | |
| A | DE - A1 - 2 832 586 (AMERON)<br>* Anspruch 1 *<br>-- | |
| D,A | DE - A1 - 2 634 043 (TUBOS CONTINUOS EN POLIESTER REFORZADO)<br>* Fig. 3 *<br>---- | |
| D,A | DE - A1 - 2 720 983 (BRUNSWICK)<br>* Anspruch 1 *<br>---- | |

**KLASSIFIKATION DER ANMELDUNG (Int. Cl.³)**

B 29 D   23/12

**RECHERCHIERTE SACHGEBIETE (Int. Cl.³)**

B 29 D    3/02

B 29 D   23/12

B 65 H   81/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 09-06-1981 | BITTNER |

EPA form 1503.1  08.78